# EUROPEAN PATENT SPECIFICATION

(11) **EP 4 299 286 B1**
(45) Date of publication and mention of the grant of the patent: **29.07.2026**
(21) Application number: 22759012.2
(22) Date of filing: 23.02.2022
(51) Int. Cl.: B29C 64/209, B29C 64/295, B33Y 30/00, B29C 64/241, B29C 48/30, B29C 64/118

(54) **HEAD FOR ADDITIVE PRODUCTION MACHINE, MACHINE AND SYSTEM COMPRISING THE HEAD**
KOPF FÜR MASCHINE ZUR GENERATIVEN FERTIGUNG, MASCHINE UND SYSTEM MIT DEM KOPF
TÊTE POUR MACHINE DE FABRICATION ADDITIVE, MACHINE ET SYSTÈME COMPRENANT LADITE TÊTE

(30) Priority: 24.02.2021 ES 202130153
(43) Date of publication of application: 03.01.2024
(73) Proprietor: M. Torres Diseños Industriales, S.A.U., 31119 Torres De Elorz (Navarra) (ES)
(72) Inventor: TORRES MARTINEZ, Manuel, deceased (ES)
(74) Representative: Evens, Paul Jonathan
(86) International application number: PCT/ES2022/070097
(87) International publication number: WO 2022/180290

(56) References cited:
- EP-B1- 3 117 982
- WO-A1-2018/029012
- CN-A- 112 008 969
- CN-U- 207 643 704
- CN-U- 207 643 704
- CN-U- 211 641 001
- DE-A1- 102017 207 291
- DE-A1- 19 815 005
- FR-A1- 3 063 451
- US-A1- 2014 048 980
- US-A1- 2015 174 824
- US-A1- 2017 217 088
- US-A1- 2017 320 267
- US-A1- 2020 238 610
- US-A1- 2020 376 759

## Description

### Technical field

The object of the present invention is a head and a 3D printing additive production machine. The invention is suitable for the manufacture of large parts, preferably by deposition in a plane by means of a movable vertical wall.

### State of the art

Additive production machines comprising an extruder and a head connected to said extruder are known. The extruder pushes the material to be deposited towards the head, which in turn deposits it on a table. The extruder comprises a spindle the speed of rotation of which makes it possible to control the flow of material. The deposited material is normally composite.

Machines are known in which the extrusion is carried out along a vertical axis, i.e., the machine head deposits the material on a horizontal table. The head moves vertically as it deposits the layers, or the part moves vertically downwards for the same purpose.

Horizontal table deposition machines are also known in which the head moves horizontally throughout the part by means of a robotic arm performing a vertical extrusion.

For printing large parts, one of the known solutions is the machine for deposition of material on a vertical wall. In this case, the vertical wall moves perpendicular to the table in each layer of material deposition, in turn moving the part away from the head, thus allowing a layer of material to be deposited on top of the previous one.

In the machines known in the state of the art, the deposition of material is carried out by heating the material to be deposited and depositing same by means of a nozzle while a roller compacts the deposited material.

The compacting roller is responsible for compacting the material after it leaves the rotating nozzle, thus ensuring that the final surface of the layer of deposited material achieves certain flatness tolerances, in addition to facilitating adhesion between layers.

There are times when it is necessary to deposit more material, requiring more width of the deposited material. For this purpose, it is necessary to make more passes to achieve the desired width in the same layer, which means more processing time. Alternatively, the nozzle can be changed by another one with a larger or smaller diameter, which means having to interrupt the printing process.

Document US2017320267A1 discloses a head for an additive production machine according to the preamble of claim 1.

### Object of the invention

The object of the invention is a head for an additive production machine according to claim 1. As previously mentioned, the additive production machine comprises an extruder that can be connected to the head. The extruder has a longitudinal shaft along which the material to be deposited is moved to form the part.

The head that is the object of the invention comprises a nozzle comprising an elongate outlet for depositing a bead of printing material. The nozzle comprising means to vary the deposition width wherein said means comprise means for rotating the nozzle with respect to the longitudinal shaft of the extruder, so that the rotation of the nozzle with respect to the direction of movement of the head varies the width of the bead of deposited material.

The outlet of the nozzle has an elongate shape, allowing the bead width to be changed with the rotation of the nozzle. The nozzle is equipped with a continuous rotation movement given by the nozzle rotation means, which are preferably in the form of a first crown concentrical with the shaft of the extruder and that rotates with respect thereto, which allows the angle of orientation of the nozzle with respect to the direction of movement of the extruder to be changed, so that due to the elongate geometry of the outlet nozzle it is possible to vary the bead width of material deposited by rotating the same in its position relative to the direction of movement.

When the material is deposited, the parameter that must remain constant within the same layer of deposited material, and usually throughout the different layers, is the material thickness. The fact of rotating the nozzle to vary the bead width of material deposited has a direct effect on the speed at which the head moves and on the speed of rotation of the extruder spindle that controls the flow of material.

As usual in most machines of this type, said head preferably comprises a compacting roller for compacting the printing material deposited by said nozzle. In this way the nozzle and the compacting roller are configured to be rotated about the longitudinal shaft of the extruder to carry out the deposition and compacting of printing material along the direction of movement of the head during the deposition of the material.

The position of the compacting roller must coincide with that of the trajectory that the nozzle has previously followed. To this end, in the invention, the compacting roller is equipped with a rotation system independent with respect to the shaft of the extruder and concentrical thereto, but coordinated with the other parameters of the printing process.

In this way it is easier to follow the deposition trajectory, but also with the independent rotation of the nozzle it is possible to vary the width of deposited material to later compact same depending on the requirements.

The head comprises heating means, preferably infrared lamps solidly attached to a third crown concentrical with the shaft of the extruder and that rotates with respect to the same independently of the rotation of the nozzle and the compacting roller.

In this way, the infrared lamps rotate together with the third crown to follow the trajectory preferably in the opposite position to the compacting roller, but with the ability to rotate independently of the rotation of the compacting roller and the nozzle, so that the position with respect to the compacting roller can be varied if another positioning is required for a better heating of the deposited material. Thus, the deposited material is heated in a more localised and efficient manner.

According to an exemplary embodiment, the head comprises a support base plate that can be fixed with respect to the extruder, for fixing means for driving the rotation of the compacting roller, and/or of the heating system, and/or of the nozzle.

Due to this configuration, the drives for rotating the compacting roller, the infrared lamps and/or the nozzle are fixed in a cantilever on the same support to which the extruder is fixed, so that the surface of the extruder is free for including a jacket heated by heating resistors of the material throughout the extruder. Furthermore, it provides a more compact configuration for the material deposition head.

The head that is the object of the invention is preferably used for printing on a vertical wall. The head would be located facing a vertical wall that moves horizontally as the layers are deposited. However, it could also be applied for printing on a wall or horizontal table to support the deposited material without varying the object of the invention.

According to a preferred embodiment of the invention, the nozzle is directly slidably fixed on the extruder instead of on the support base plate. Due to this configuration, if the extruder suffers a slight deformation due to its own weight or expansion, the nozzle rotation drive and the nozzle will copy said deformation such that coordination problems between the pinion and crown of this drive are avoided, ensuring accurate deposition of the material.

In this case, the end portion of the extruder would be left without space for the positioning of the heating resistor because in order to rotate, the nozzle requires being supported in the extruder, preferably by a bearing and the parts requiring to place same, occupying a space that is not possible to heat. To this end, it is provided that, according to a design option, the head comprises a resistor support to fix a heating resistor for the nozzle with respect to the end of the shaft. In this way, the temperature of the material is maintained before deposition for a correct deposition.

Preferably, said resistor support can be fixed to the support base plate. So that the nozzle is preferably arranged through a first crown, or more preferably with a bearing, slidingly supported on the extruder itself and externally slidingly supported on the resistance support. Due to this configuration, the nozzle is doubly supported ensuring greater resistance at the tip for a more accurate deposition of material.

Another object of the present invention is an additive production machine comprising the head previously described.

Another object of the present invention is an additive production system comprising a machining machine to establish the finish and final tolerance required.

The additive production machine object of the invention is suitable for the manufacture of large-format parts. Although it is initially intended for producing moulds, it can be used for producing any other type of part that allows this production process and materials.

### Description of the figures

In order to complete the description and provide a better understanding of the invention, figures are provided. Said figures form an integral part of the description and illustrate an exemplary embodiment of the invention.
Figure 1 shows a perspective view of an embodiment of an extruder and a head of an additive production machine.
Figure 2 shows a perspective view of the head of the exemplary embodiment corresponding to the machine of figure 1.

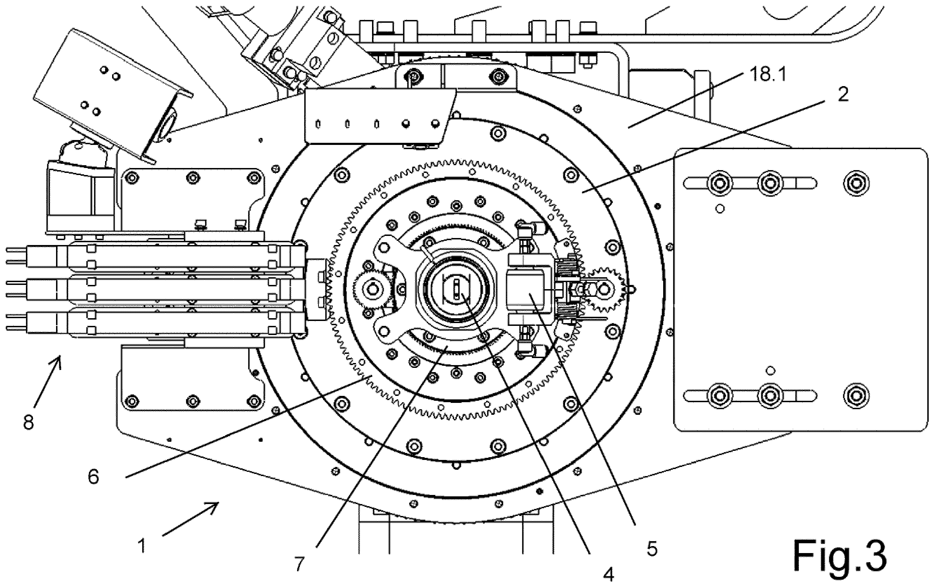

Figure 3 shows a front view of the head corresponding to figure 2.

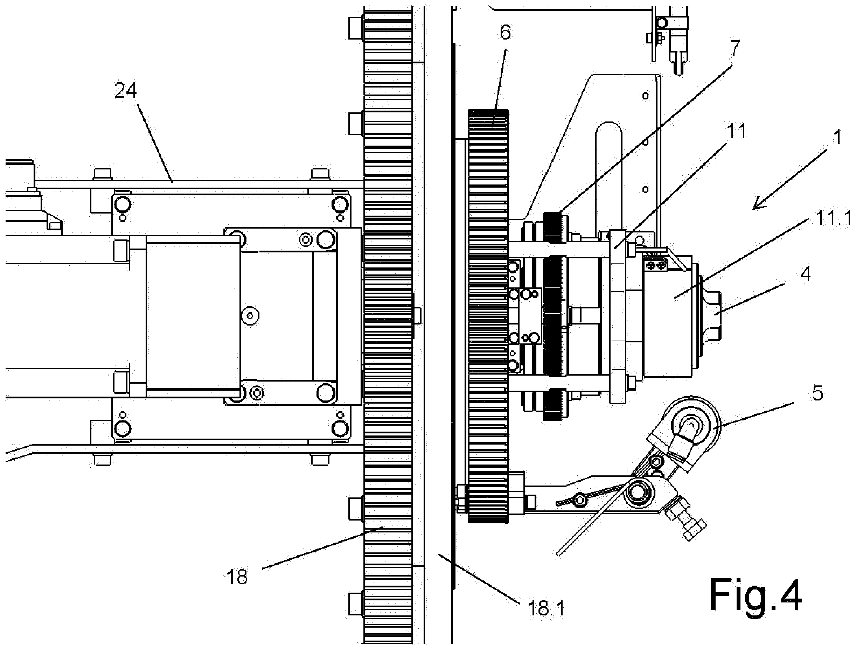

Figure 4 shows an upper view of the head corresponding to figure 2.
Figure 5 shows a front view of the head corresponding to figure 2 in a first position in which a bead (represented in bold) is deposited on a vertical wall with a first thickness wherein the extruder moves vertically.
Figure 6 shows a front view of the head corresponding to figure 2 in a second position in which a bead (represented in bold) is deposited on a vertical wall with a second thickness wherein the extruder moves horizontally.
Figure 7 shows a cross-sectional detail view of the nozzle where an exemplary embodiment of the anti-drip system can be seen.
Figure 8 shows a longitudinal cross-sectional view of the head and the extruder.

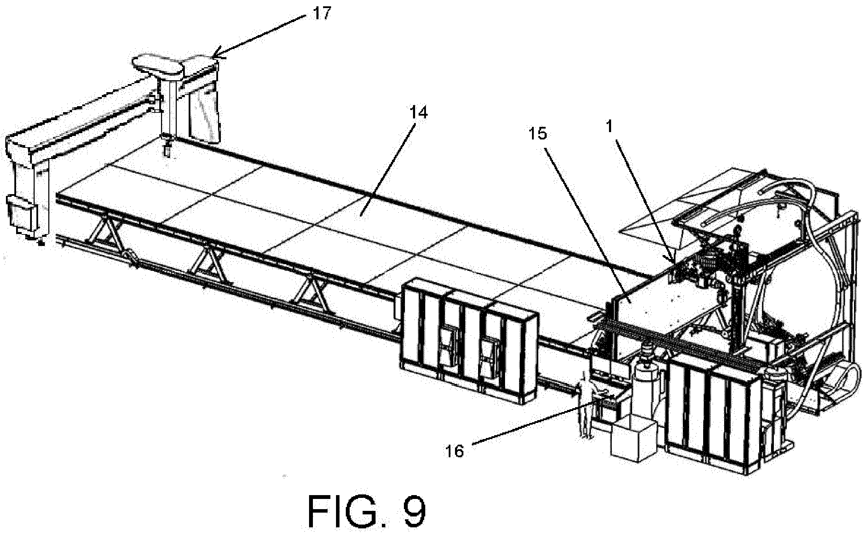

Figure 9 shows a schematic perspective view of an exemplary embodiment of an additive production machine including a machining machine.

### Detailed description of the invention

In light of the aforementioned figures, and in accordance with the adopted numbering, one may observe therein a preferred exemplary embodiment of the invention, which comprises the parts and elements indicated and described in detail below.

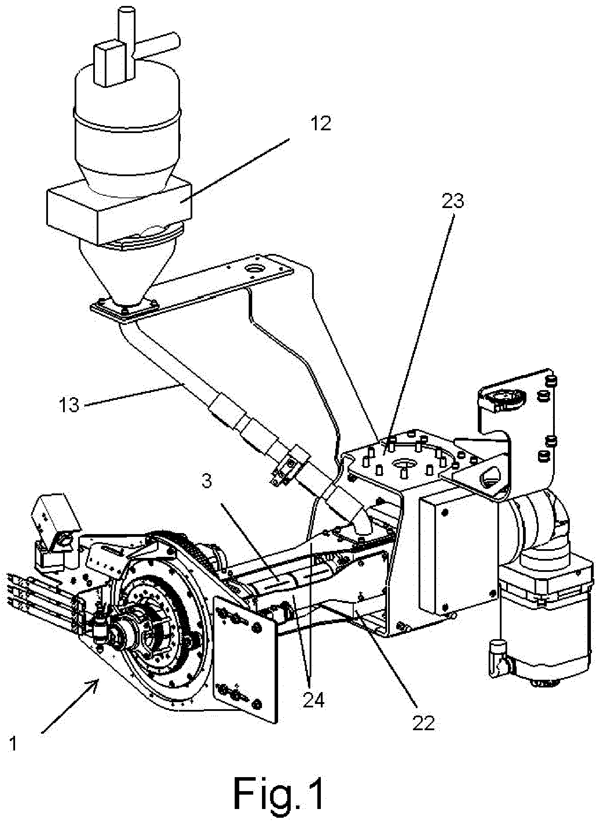

Figure 1 shows a perspective view of part of an additive production machine according to an embodiment of the invention. The machine comprises an extruder (3) and a head (1) attached to the extruder (3) and located perpendicular to the longitudinal shaft of the extruder (3). Both elements are fixed to a robot, preferably a six-axis robot, which moves both elements following the material deposition trajectory.

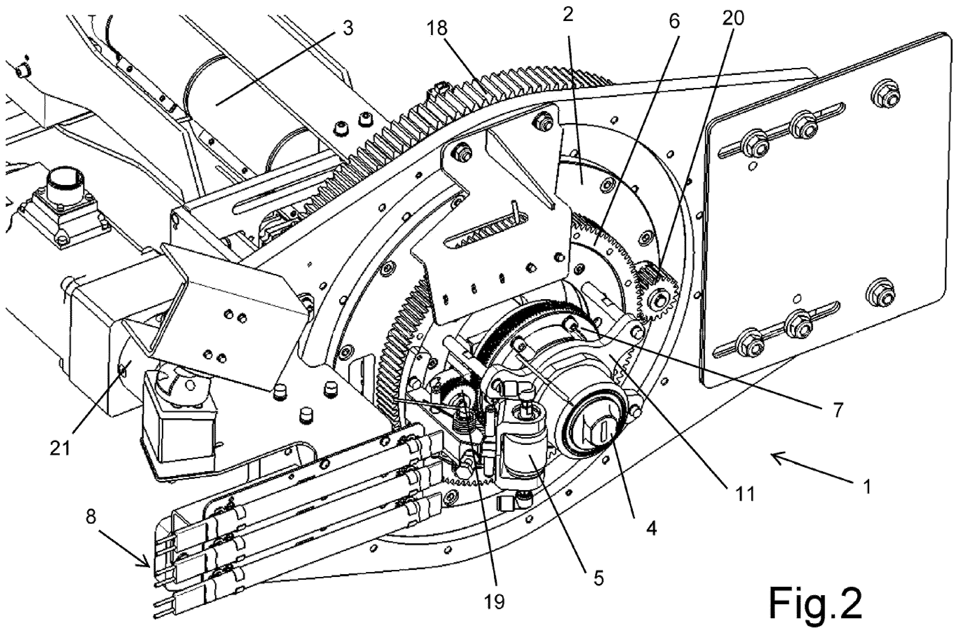

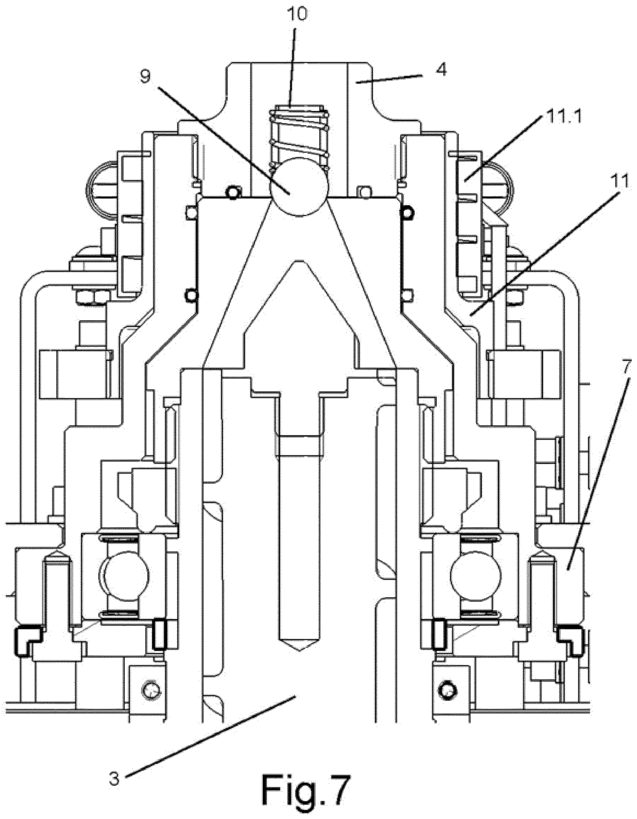

Figure 2 shows an exemplary embodiment of the head (1) comprising a first crown (7) slidingly fixed to the extruder (3), preferably said first crown (7) is fixed to the extruder (3) by means of a bearing (figure 7). To said first crown (7), concentrical with respect to the shaft of the extruder (3) that rotates with respect thereto, a nozzle (4) is fixed comprising an outlet for depositing a bead of printing material. Preferably, this printing material will be made of plastic material with FC or FV additives; other types of composite materials may be used to form parts by means of additive production.

The head (1) comprises a support base plate (2), wherein the support base plate (2) is fixed with respect to the extruder (3), remaining cantilevered as the same extruder (3). The fixed portion of a second crown (6) concentrical with respect to the shaft of the extruder (3) is fixed to said support base plate (2) by the external portion. A compacting roller (5) is solidly attached to said second crown (6), so that said compacting roller (5) is able to rotate with respect to the shaft of the extruder (3).

In this way, the nozzle (4) and the compacting roller (5) are configured to rotate independently with respect to the longitudinal shaft of the extruder (3) to carry out the deposition and by means of the compacting roller (5) the compacting of the printing material along the direction of movement of the head (1) following the material deposition trajectory. In an exemplary embodiment, the compacting roller (5) may be refrigerated.

The head (1) also comprises a heating system (8) configured to heat the previously deposited layer of material. The temperature at which the previous layer must be depends on the type of material, so the heating system allows the power to be varied to thus adjust to the required temperature. In this way, it is ensured that the next layer of material adheres correctly to the previously deposited layer, since it is necessary for the material of the previous layer to be at a certain temperature. The heating system (8) is attached to a plate (18.1) solidly attached to a third crown (18) the fixed portion of which is fixed to the base support plate (2), so that the third crown (18) is concentrical to the shaft of the extruder (3) and can rotate with respect thereto.

The heating system (8) of the embodiment comprises infrared lamps. Other heating methods could be used, such as the use of high temperature airflow or a laser heating system. In this way, the infrared lamps are preferably arranged on the opposite side to that of the compacting roller (5), although due to their independent rotation they can be placed in any position when the situation requires it.

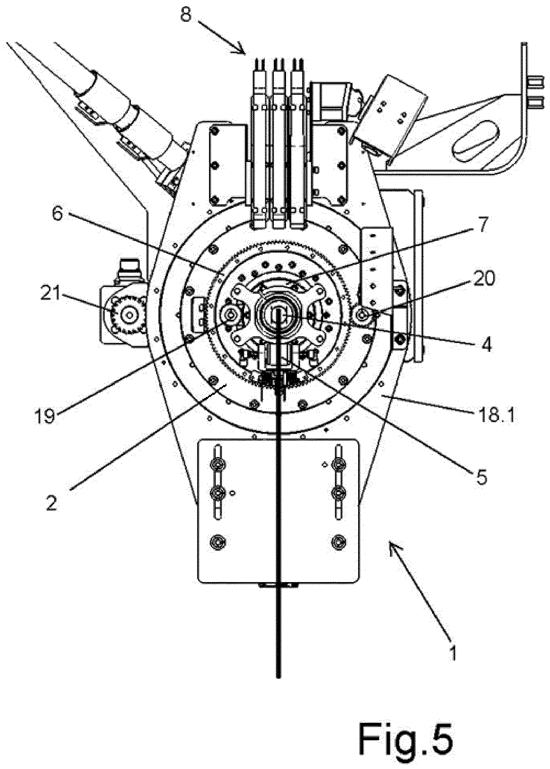

Figure 5 represents the case in which the head (1) deposits material on a vertical wall and moves vertically upwards. The nozzle (4) deposits a bead of filiform thickness due to the position (4) thereof. The compacting roller (5) is located vertically below the nozzle (4) so that it compacts the deposited bead in its passage while the heating system (8) is arranged on the opposite side to the compacting roller (5) for heating the previously deposited material.

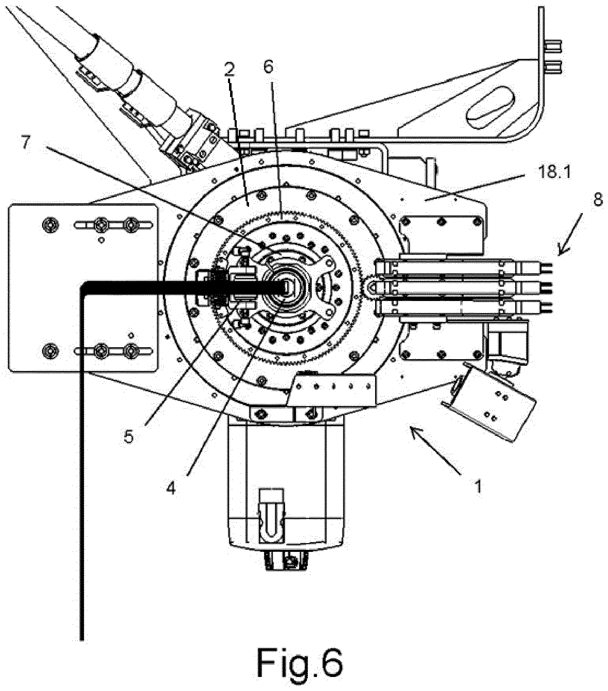

Figure 6 represents the case in which the head (1) deposits material in a vertical plane and moves horizontally. Regarding the position of figure 5, the head (1) together with the extruder (3) makes a change of trajectory from vertical to horizontal, so that the compacting roller (5) rotates 90° through the rotation of the second crown (6) with respect to the shaft of the extruder (3) being located to the left of the nozzle (4). To make a change in the width of the deposited bead, the nozzle (4) instead of making the same 90° turn with respect to the shaft of the extruder (3) maintains its position. Since the outlet of the nozzle (4) has an elongate shape, the rotation of the nozzle (4) with respect to the direction of movement of the head (1) varies the bead width of deposited material, in this case maintaining the position, the elongate opening of the nozzle (4) remains in the maximum opening position, the bead of deposited material being the maximum width allowed, unlike the bead of deposited material in Figure 5 which shows the minimum bead width of deposited material allowed by the opening of the nozzle. In this way, with the elongate geometry of the opening of the nozzle (4), it is possible to obtain different bead widths of material along the material deposition trajectory followed by the extruder (3).

Like the compacting roller (5), the heating system (8) of the previous layer of material must follow the trajectory of the contour where material is subsequently going to be deposited, although in advance of the deposition of material, so it also counts with a rotating movement that ensures said orientation by being solidly attached to the support base plate (2). Therefore, in the case of figure 6 with the rotation of the third crown (18) 90° with respect to the shaft of the extruder (3), the plate (18.1) and therefore, the heating system (8) solidly attached thereto, rotate 90°, placing themselves to the right of the nozzle (4) to position according to the trajectory of the contour previously deposited.

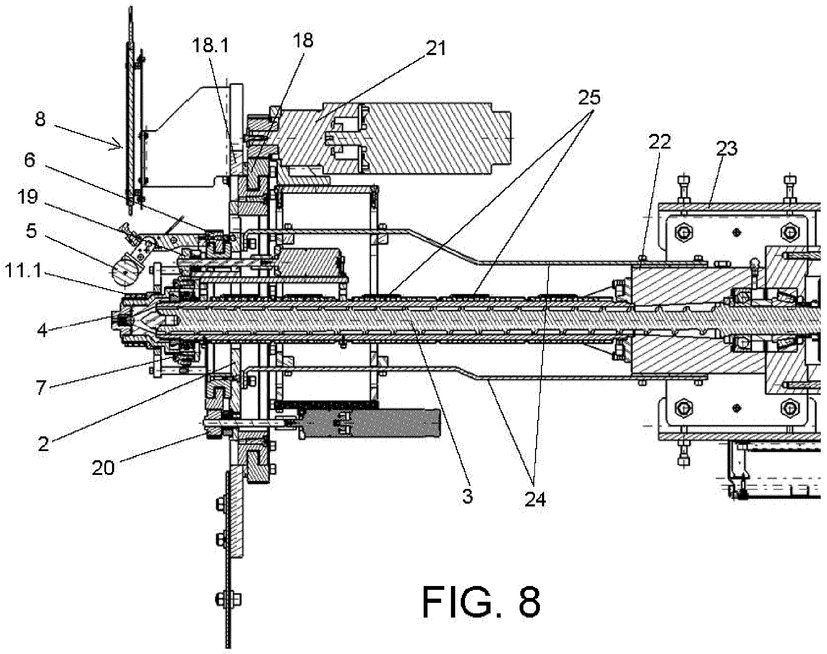

Therefore, the rotation of the nozzle (4), the compacting roller (5) and the heating system (8) must be independent of one another, being able to rotate continuously except for the heating system which, due to the use of wiring for heating allows a substantially 360° rotation, restoring the rotation being required to avoid breaking the wiring. According to a preferred embodiment, in the section of figure 8, it can be seen how the mobile crowns that rotate said elements are arranged. In this way, it can be seen how the base support plate (2) is fixed by means of side plates (24) to a support block (22) to which the extruder (3) is also fixed. This support block (22) is fixed to a connection structure (23) preferably to a robot to provide the movements for material deposition. Consequently, both the extruder (3) and the support base plate (2) of the head (1) will remain concentrically cantilevered.

The fixed portion of the third crown (18) is fixed to this base support plate (2) by the internal portion, the mobile plate (18.1) of the heating system (8) being fixed to the third crown (18), the third crown (18) being able to rotate with respect to the shaft of the extruder (3) by driving a third drive (21) that by means of a motor rotates the third crown (18), and consequently the heating system (8) rotates with respect to the shaft of the extruder (3), said third drive (21) being fixed to the side plates (24). To this same support base plate (2), and externally (externally being considered as the part furthest from the robot) the fixed portion of the second crown (6) is fixed as previously stated. The second crown (6) being driven by means of a second drive (20) that is also fixed to the side plates (24).

This fixing arrangement allows the extruder (3) to be placed inside a heated jacket comprising five resistors (25) that ensure that the material entering same in the form of solid pellets is heated, compacted and mixed until it melts at the required temperature to be able to be ejected through the nozzle (4). If these elements had been fixed to the extruder itself, the jacket should have been interrupted, giving problems for maintaining a homogeneous temperature.

However, for the fixing of the nozzle (4), as can be seen in figure 8, the nozzle (4) is fixed to a first crown (7) that is arranged slidingly fixed to the extruder (3), preferably by means of bearings. This first crown (7) is driven by a first drive (19) that is fixed to the extruder (3). In this way the nozzle (4) rotates independently of the compacting roller (5) and the heating system (8), but since it is fixed directly to the extruder (3) it interrupts the jacket of resistors.

For this reason, the nozzle (4) additionally comprises a nozzle resistor (11.1) to maintain the temperature at the outlet of the material. Said nozzle resistor (11.1) is fixed to the fixed portion of the second crown (6) by means of a resistor support (11). In this way the nozzle (4) is also slidingly supported on the nozzle resistor (11.1) providing greater rigidity and stability to the nozzle (4).

According to one design option, the nozzle (4) is arranged fixed by threading, so that it is removable for replacement due to deterioration or for the inclusion of nozzles (4) with different shapes of the material outlet.

A numerical control system (CNC) controls all these movements to ensure that the process is carried out according to the parameters that ensure an adequate deposition of material, for its subsequent compacting and an adequate temperature for its correct adhesion to the next layer of deposited material.

The additive manufacturing system of the invention also allows working with the longitudinal shaft of the extruder (3) vertically, i.e., depositing the material on a horizontal plane.

The nozzle (4) can internally comprise an anti-drip system. Figure 7 shows an exemplary embodiment of said anti-drip system. The anti-drip system comprises a sphere (9) driven by a spring (10) that closes the flow of molten material to prevent material from escaping from the nozzle (4) when not required.

The additive production machine comprising the head (1) according to the above features is also an object of the invention. The machine comprises a horizontal table (14). The horizontal table (14) is the one on which the part is formed. On this table the vertical wall (15) is moved which is configured to be moved in a direction perpendicular to the printing plane as the different layers of material are deposited on the deposition plane.

The material is always deposited in the same plane, the first layer on the vertical wall (15), which moves longitudinally to allow the machine to deposit the following layers of material on the previously deposited layer. The longitudinal movement of the vertical wall (15) moves the part so that the next and successive layers can be deposited.

The vertical wall (15) moves on a precision guide. In an exemplary embodiment, said movement is controlled by two servo reducers placed one at each end of the vertical wall (15). Both the horizontal table (14) and the vertical wall (15) have a precision geometric assembly that guarantees its flatness, horizontality, perpendicularity between both tables (14, 15) and perpendicularity to the longitudinal shaft of the extruder (3).

The extruder (3) and the head (1) can be mounted on a robotic platform, for example, on a six-axis robot. The additive production machine can comprise additional transverse guidance to increase the surface on which the extruder (3) is able to print. The extruder (3) and the head (1) can also be mounted on other types of machines, such as a Cartesian column or gantry-type machine.

Within the different portions of the extruder (3) (figure 1), and if we follow the flow of material, the extruder (3) comprises a material aspirator and dispenser (12) that receives the dehumidified material and supplies same to the extruder (3) by means of a pipe (13) assisted by a vibrating system, for example pneumatic, installed in the same pipe (13).

The pipe (13) comprises a heating system, for example, electrical resistors in this path together with said vibrating system. In this way, the pipe (13) begins to heat the material inside this pipe (13) so that it reaches a temperature closer to the melting point of the extruder body (3). This reduces the abrasion that the material used produces on the endless screw of the extruder (3) when it is in a solid state.

The extruder (3) is made up of a jacket heated by a series of resistors, the temperature of which is individually controlled, which are placed along the same, and internally a suitably treated high-quality steel endless screw, which will be responsible for receiving the material in the form of solid pellets and making it advance towards the area of the outlet nozzle while heating same until it melts. The material is mixed and the pressure thereof is increased up to the values required by the process. The speed of rotation of the endless screw is controlled by the general system control by means of a servomotor to, together with other parameters of the process, ensure that it comes through the nozzle (4) in the required amount, pressure and temperature.

The aforementioned support block (22) to which the extruder is also fixed, may be refrigerated to protect the drives and other support elements.

The machine comprises a thermographic camera and a temperature sensor. Both elements provide the system with information about process parameters: temperature of the material from the previous layer, previously heated, and about the material that has just been deposited before being compacted. This allows the control to adjust the parameters so that they are within the ranges required for a correct printing process.

The machine also comprises the following auxiliary elements:
- Control post (16), which together with the process control system allow the supervision of the process and that it adjusts to the previously defined parameters.
- Dehumidifier that allows the elimination of the existing humidity in the material in the form of pellets with which the extruder (3) is subsequently going to be fed.
- Refrigerator for cooling the main body of the extruder (3) and the compacting roller (5), if required.
- Smoke extraction system. Made up of a hood placed on the extruder (3) and an aspirator with the appropriate filters for extracting and filtering the gases generated by the extrusion process, due to the melting of the material and the high temperatures required.

Additionally, this additive production machine, optionally, can form part of a production system that includes a machining machine (17) that allows machining certain surfaces of the part obtained by means of the additive production process to the finish required by the end use of the same. The machining machine can work on the part supported on the same table on which it has been formed, while the extrusion system is left in a stopped position. Alternatively, the part can be moved to the area where the machining machine is located so that the additive production system can continue with its part forming process without interfering with other subsequent processes.

## Claims

1. A head (1) for an additive production machine, wherein the machine comprises an extruder (3) that can be moved in a plane to deposit material in the plane and to which the head (1) is connected, the extruder (3) comprising a longitudinal shaft; the head (1) includes a nozzle (4) comprising an elongate outlet for depositing a bead of printing material, the nozzle (4) comprising means to vary the deposition width, wherein the means for varying the deposition width comprise means for rotating the nozzle (4) with respect to the longitudinal shaft of the extruder (3), such that the rotation of the nozzle (4) with respect to the direction of movement of the head (1) varies the width of the bead of deposited material,
**characterised in that** the head (1) comprises a heating system (8) that rotates with respect to the longitudinal shaft of the extruder (3) independently of the rotation of the nozzle (4), the heating system (8) being configured to heat the previously deposited layer of material.

2. The head (1) for an additive production machine, according to claim 1, further comprising a compacting roller (5) that rotates with respect to the longitudinal shaft of the extruder (3) independently of the rotation of the nozzle (4) for compacting the printing material deposited by said nozzle (4).

3. The head (1) for an additive production machine, according to claim 1, wherein the heating system (8) comprises infrared lamps.

4. The head (1) for an additive production machine, according to any one of the preceding claims, further comprising a support base plate (2) that can be fixed with respect to the extruder (3) for fixing means for driving the rotation of the compacting roller (5), and/or the heating system (8), and/or the nozzle (4).

5. The head (1) for an additive production machine, according to any one of the preceding claims, further comprising a resistor support (11) to fix a heating resistor of the nozzle (4).

6. The head (1) for an additive production machine, according to claim 5 when dependent on claim 4, wherein the resistor support (11) can be fixed to the support base plate (2).

7. The head (1) for an additive production machine, according to the preceding claim, wherein the nozzle (4) is arranged slidingly supported on the extruder (3) and slidingly supported on the resistor support (11).

8. The head (1) for an additive production machine, according to any one of the preceding claims, wherein the nozzle (4) comprises an anti-drip system.

9. The head (1) for an additive production machine, according to the preceding claim, wherein the anti-drip system comprises a sphere (9) driven by means of a spring (10) that closes the flow of material from the outlet of the nozzle (4).

10. An additive production machine, comprising a head (1) according to any one of the preceding claims.

11. The additive production machine, according to the preceding claim, further comprising a material aspirator and dispenser (12) and a pipe (13) that extends between the material aspirator and dispenser (12) and the extruder (3), wherein the pipe (13) comprises a heating system and a vibrator system to improve the flow of material through the pipe (13).

12. The additive production machine, according to any one of claims 10 or 11, wherein the extruder (3) comprises a jacket heated by resistors with individual temperature control.

13. The additive production machine, according to any one of claims 10 to 12, further comprising a horizontal table (14) and a vertical wall (15) configured to be moved in a direction perpendicular to the material deposition plane as the different layers of material are deposited.

14. An additive production system, comprising an additive production machine according to any one of claims 10 to 13, further comprising a machining machine (17) to establish the finish and final tolerance required for the part obtained by deposition of material.

## Patentansprüche

1. Kopf (1) für eine Maschine zur generativen Fertigung, wobei die Maschine einen Extruder (3) umfasst, der in einer Ebene bewegt werden kann, um Material in der Ebene abzugeben, und mit dem der Kopf (1) verbunden ist, wobei der Extruder (3) einen Längsschaft umfasst; der Kopf (1) eine Düse (4) enthält, die einen länglichen Auslass zum Abgeben eines Wulstes aus Druckmaterial umfasst, wobei die Düse (4) Mittel zum Variieren der Abgabebreite umfasst, wobei die Mittel zum Variieren der Abgabebreite Mittel zum Drehen der Düse (4) in Bezug auf den Längsschaft des Extruders (3) umfassen, sodass die Drehung der Düse (4) in Bezug auf die Bewegungsrichtung des Kopfes (1) die Breite des Wulstes des abgegebenen Materials variiert,
**dadurch gekennzeichnet, dass** der Kopf (1) ein Heizsystem (8) umfasst, das sich unabhängig von der Drehung der Düse (4) in Bezug auf den Längsschaft des Extruders (3) dreht, wobei das Heizsystem (8) dazu konfiguriert ist, die zuvor abgegebene Materialschicht zu erwärmen.

2. Kopf (1) für eine Maschine zur generativen Fertigung nach Anspruch 1, ferner umfassend eine Verdichtungswalze (5), die sich in Bezug auf den Längsschaft des Extruders (3) unabhängig von der Drehung der Düse (4) dreht, um das durch die Düse (4) abgegebene Druckmaterial zu verdichten.

3. Kopf (1) für eine Maschine zur generativen Fertigung nach Anspruch 1, wobei das Heizsystem (8) Infrarotlampen umfasst.

4. Kopf (1) für eine Maschine zur generativen Fertigung nach einem der vorhergehenden Ansprüche, ferner umfassend eine Stützgrundplatte (2), die in Bezug auf den Extruder (3) befestigt werden kann, um Mittel zum Antreiben der Drehung der Verdichtungswalze (5) und/oder des Heizsystems (8) und/oder der Düse (4) zu befestigen.

5. Kopf (1) für eine Maschine zur generativen Fertigung nach einem der vorhergehenden Ansprüche, ferner umfassend eine Widerstandsstütze (11), um einen Heizwiderstand der Düse (4) zu befestigen.

6. Kopf (1) für eine Maschine zur generativen Fertigung nach Anspruch 5, wenn abhängig von Anspruch 4, wobei die Widerstandsstütze (11) an der Stützgrundplatte (2) befestigt werden kann.

7. Kopf (1) für eine Maschine zur generativen Fertigung nach dem vorhergehenden Anspruch, wobei die Düse (4) auf dem Extruder (3) verschiebbar gestützt und auf der Widerstandsstütze (11) verschiebbar gestützt angeordnet ist.

8. Kopf (1) für eine Maschine zur generativen Fertigung nach einem der vorhergehenden Ansprüche, wobei die Düse (4) ein Tropfsperrsystem umfasst.

9. Kopf (1) für eine Maschine zur generativen Fertigung nach dem vorhergehenden Anspruch, wobei das Tropfsperrsystem eine Kugel (9) umfasst, die mittels einer Feder (10) angetrieben wird, die den Materialfluss von dem Auslass der Düse (4) schließt.

10. Maschine zur generativen Fertigung, umfassend einen Kopf (1) nach einem der vorhergehenden Ansprüche.

11. Maschine zur generativen Fertigung nach dem vorhergehenden Anspruch, ferner umfassend einen Materialansauger und -spender (12) und eine Leitung (13), die sich zwischen dem Materialansauger und -spender (12) und dem Extruder (3) erstreckt, wobei die Leitung (13) ein Heizsystem und ein Vibrationssystem umfasst, um den Materialfluss durch die Leitung (13) zu verbessern.

12. Maschine zur generativen Fertigung nach Anspruch 10 oder 11, wobei der Extruder (3) einen Mantel umfasst, der durch Widerstände mit individueller Temperatursteuerung beheizt wird.

13. Maschine zur generativen Fertigung nach einem der Ansprüche 10 bis 12, ferner umfassend einen horizontalen Tisch (14) und eine vertikale Wand (15), die dazu konfiguriert ist, in einer Richtung senkrecht zu der Materialabgabeebene bewegt zu werden, wenn die verschiedenen Materialschichten abgegeben werden.

14. System zur generativen Fertigung, umfassend eine Maschine zur generativen Fertigung nach einem der Ansprüche 10 bis 13, ferner umfassend eine Bearbeitungsmaschine (17), um den Oberflächenzustand und die Endtoleranz herzustellen, die für das durch Abgabe von Material erhaltene Teil erforderlich sind.

## Revendications

1. Tête (1) pour une machine de production additive, dans laquelle la machine comprend une extrudeuse (3) qui peut être déplacée sur un plan pour déposer du matériau sur le plan et à laquelle la tête (1) est reliée, l'extrudeuse (3) comprenant un arbre longitudinal ; la tête (1) comprend une buse (4) comprenant une sortie allongée destinée à déposer un cordon de matériau d'impression, la buse (4) comprenant des moyens pour faire varier la largeur de dépôt, dans laquelle les moyens pour faire varier la largeur de dépôt comprennent des moyens de rotation de la buse (4) par rapport à l'arbre longitudinal de l'extrudeuse (3), de sorte que la rotation de la buse (4) par rapport au sens de déplacement de la tête (1) fasse varier la largeur du cordon de matériau déposé,
**caractérisée en ce que** la tête (1) comprend un système de chauffage (8) qui tourne par rapport à l'arbre longitudinal de l'extrudeuse (3) indépendamment de la rotation de la buse (4), le système de chauffage (8) étant configuré pour chauffer la couche de matériau déposée précédemment.

2. Tête (1) pour une machine de production additive, selon la revendication 1, comprenant en outre un rouleau de compactage (5) qui tourne par rapport à l'arbre longitudinal de l'extrudeuse (3) indépendamment de la rotation de la buse (4) pour compacter le matériau d'impression déposé par ladite buse (4).

3. Tête (1) pour une machine de production additive, selon la revendication 1, dans laquelle le système de chauffage (8) comprend des lampes infrarouges.

4. Tête (1) pour une machine de production additive, selon l'une quelconque des revendications précédentes, comprenant en outre une plaque de base de support (2) qui peut être fixée par rapport à l'extrudeuse (3) pour fixer des moyens d'entraînement en rotation du rouleau de compactage (5), et/ou du système de chauffage (8), et/ou de la buse (4).

5. Tête (1) pour une machine de production additive, selon l'une quelconque des revendications précédentes, comprenant en outre un support de résistance (11) pour fixer une résistance de chauffage de la buse (4).

6. Tête (1) pour une machine de production additive, selon la revendication 5 lorsqu'elle dépend de la revendication 4, dans laquelle le support de résistance (11) peut être fixé à la plaque de base de support (2).

7. Tête (1) pour une machine de production additive, selon la revendication précédente, dans laquelle la buse (4) est agencée en support coulissant sur l'extrudeuse (3) et en support coulissant sur le support de résistance (11).

8. Tête (1) pour une machine de production additive, selon l'une quelconque des revendications précédentes, dans laquelle la buse (4) comprend un système anti-goutte.

9. Tête (1) pour une machine de production additive, selon la revendication précédente, dans laquelle le système anti-goutte comprend une sphère (9) entraînée au moyen d'un ressort (10) qui ferme l'écoulement de matériau depuis la sortie de la buse (4).

10. Machine de production additive, comprenant une tête (1) selon l'une quelconque des revendications précédentes.

11. Machine de production additive, selon la revendication précédente, comprenant en outre un aspirateur et distributeur de matériau (12) et un tuyau (13) qui s'étend entre l'aspirateur et distributeur de matériau (12) et l'extrudeuse (3), dans laquelle le tuyau (13) comprend un système de chauffage et un système de vibrateur pour améliorer l'écoulement de matériau à travers le tuyau (13).

12. Machine de production additive, selon l'une quelconque des revendications 10 ou 11, dans laquelle l'extrudeuse (3) comprend une chemise chauffée par des résistances à commande individuelle de la température.

13. Machine de production additive, selon l'une quelconque des revendications 10 à 12, comprenant en outre une table horizontale (14) et une paroi verticale (15) configurées pour être déplacées dans une direction perpendiculaire au plan de dépôt de matériau à mesure que les différentes couches de matériau sont déposées.

14. Système de production additive, comprenant une machine de production additive selon l'une quelconque des revendications 10 à 13, comprenant en outre une machine d'usinage (17) pour établir la tolérance de finition et finale requise pour la pièce obtenue par dépôt de matériau.
